# EUROPÄISCHE PATENTSCHRIFT

(11) **EP 3 851 711 B1**
(45) Veröffentlichungstag und Bekanntmachung des Hinweises auf die Patenterteilung: **30.08.2023**
(21) Anmeldenummer: 21151970.7
(22) Anmeldetag: 18.01.2021
(51) Int. Cl.: F16K 7/12, F16K 37/00

(54) **VERFAHREN ZUR UEBERWACHUNG VON MEMBRANVENTILEN**
METHOD FOR MONITORING MEMBRANE VALVES
PROCÉDÉ DE SURVEILLANCE DE SOUPAPES À DIAPHRAGME

(30) Priorität: 20.01.2020 DE 102020101174
(43) Veröffentlichungstag der Anmeldung: 21.07.2021
(73) Patentinhaber: SISTO Armaturen S.A., 6468 Echternach (LU)
(72) Erfinder: SCHAAL, Andreas, 6468 Echternach (LU); HACKENBERGER, Bernd, 6468 Echternach (LU); BRUECKER, Rainer, 6468 Echternach (LU); HESS, Timo, 6468 Echternach (LU); SICHWARDT, Paul, 6468 Echternach (LU)
(74) Vertreter: Busch, Tobias

(56) Entgegenhaltungen:
- EP-A1- 0 637 713
- EP-A1- 3 059 479
- WO-A1-2017/140418
- WO-A1-2018/193058
- WO-A1-2019/106960
- WO-A1-2020/003799
- DE-A1-102015 210 208

## Beschreibung

Die vorliegende Erfindung betrifft ein Verfahren zur Überwachung von einem Membranventil, welches über eine Sperrvorrichtung von einer geöffneten in eine geschlossene Stellposition überführt werden kann.

Membranventile werden in vielfältigsten Anwendungsbereichen dazu genutzt, um den Volumenstrom von Gasen oder Flüssigkeiten zu steuern oder zu regeln. Hierbei ist die Besonderheit, dass Membranventile eine innenliegende Membran aufweisen, über die das Ventil abgedichtet wird bzw. über die der effektive Strömungsquerschnitt gezielt eingestellt werden kann. Die Membran wird hierzu über ein Druckstück über eine vergleichsweise kleine Strecke bewegt. Der Dichtsteg kommt hierbei der Membrane entgegen. Das Betriebsmedium berührt lediglich die Membranoberfläche. Alle mechanischen Teile liegen außerhalb des medienbenetzten Raumes.

Aufgrund dieses Prinzips weisen Membranventile nur sehr geringe Toträume auf, in denen bzw. an denen sich Bestandteile des Betriebsmediums ablagern können. Somit eigenen sich derartige Ventile insbesondere für hochviskose oder hochhaftfähige Flüssigkeiten.

Für den Betrieb des Membranventils ist es von besonderer Bedeutung, dass prozess- und/oder sicherheitsrelevante Informationen möglichst genau und zeitnah ermittelt werden können. In diesem Zusammenhang kommt der Stellposition des Membranventils eine besondere Bedeutung zu. Insbesondere bei Membranventilen mit einer handbetriebenen Sperrvorrichtung ist es jedoch schwierig, die genaue Stellposition zu ermitteln. In der Praxis wurden hierzu beispielsweise Lagenendschalter verwendet, die nach einem entsprechenden Inbetriebnahme-Vorgang bei Überschreiten einer Endposition ein Signal ausgeben. Diese Endschalter ermöglichen es aber nur eine Rückmeldung darüber zu erhalten, ob eine bestimmte Stellposition erreicht wurde. Stellposition zwischen diesen Endlagen oder aber hinter den Endlagen können nicht erfasst werden. Darüber hinaus sind wegen der hohen Anschaffungs- und Installationskosten derartige Lösungen in der Praxis wenig verbreitet. Zudem können sie nicht einfach nachgerüstet werden.

In der WO 2018/193058 A1 wird Ventilpositionssensor beschrieben. Dieser umfasst ein Sensorgehäuse zum Anbringen an einem beweglichen Bauteil eines Ventils und eine Leiterplattenanordnung, die innerhalb des Gehäuses angeordnet ist. Der Ventilpositionssensor kommt bei einem druckbetätigten Überdruckventil zum Einsatz.

Die DE 10 2015 210208 A1 beschreibt ein Verfahren zum Ermitteln einer Zustandsgröße einer Ventilmembran eines motorisch angetriebenen Membranventils.

Der vorliegenden Erfindung liegt daher die Aufgabe zugrunde, die bisher üblichen Verfahren zur Überwachung von Membranventilen zu verbessern, wobei insbesondere prozess- und/oder sicherheitsrelevante Informationen während des Betriebs ermitteln werden sollen.

Diese Aufgabe wird gelöst durch ein Verfahren gemäß Anspruch 1 sowie eine Membranventilanordnung gemäß Anspruch 11. Demnach detektiert eine zumindest ein Gyroskop und ein Magnetometer aufweisende Sensorvorrichtung die Stellposition der Membran, die über die Sperrvorrichtung bewegbar ist und übermittelt diese an eine Auswerteeinheit, wobei die Auswerteeinheit anhand der detektierten Stellposition sicherheits- und/oder prozessrelevante Zustandsinformationen bestimmt.

Gyroskope werden üblicherweise auch als Kreiselinstrumente bezeichnet und eignen sich dazu, um Drehgeschwindigkeiten bzw. Drehraten um eine bestimmte Rotationsachse zu bestimmen. Bevorzugt kommt im vorliegenden Fall ein mehrachsiges, insbesondere ein dreiachsiges Gyroskop zur Anwendung, welches somit Drehungen um alle drei Raumachsen erfassen kann. Neben der Drehgeschwindigkeit bzw. der Drehrate kann auch die Drehrichtung mit Hilfe des Gyroskops erfasst werden.

Mit Hilfe des Magnetometers kann die Richtung sowie die Stärke des Erdmagnetfelds ermittelt und unter anderem die Lage der Sensorvorrichtung relativ zur Erde festgestellt werden.

Eine solche Sensorvorrichtung wird daher im Rahmen der Erfindung bevorzugt in Kombination mit einer Sperrvorrichtung eingesetzt, welche über ein Handrad das Membranventil von einer geöffneten in eine geschlossene Stellposition überführen kann. Die Sensorvorrichtung kann dann bevorzugt über ein Befestigungsblech auf dem Handrad befestigt werden. Durch das Gyroskop kann dann die Drehung des Handrades erfasst werden, wobei das Magnetometer die genaue Ausrichtung des Handrates berücksichtigt.

Des Weiteren ist im erfindungsgemäßen Verfahren ein Sollwert für die geschlossene Stellposition in einer Speichereinheit der Auswerteeinheit hinterlegt, wobei die Auswerteeinheit Unterschiede zwischen der von der Sensorvorrichtung erfassten Stellposition und dem Sollwert ermittelt und wobei die Auswerteeinheit ausgehend von den Unterschieden Zustandsinformationen über das Erreichen einer fluiddichten Stellposition und/oder über einen Verschleiß des Membranventils ermittelt.

Der Sollwert für die geschlossene Stellposition kann beispielsweise unmittelbar in der Speichereinheit hinterlegt werden, z.B. über eine Eingabeeinheit, oder aber auch über einen Inbetriebnahme-Vorgang vor dem Betrieb ermittelt werden. Hierzu wird das Membranventil in eine vollständig geöffnete und in eine vollständig geschlossene und damit fluiddichte Stellposition verfahren und die Endlagen in der Speichereinheit hinterlegt. Sofern die Endlagen bekannt sind, ist es möglich zu erkennen, ob beispielsweise ein handbetriebenes Membranventil fluiddicht gesperrt wurde oder ob weitere Drehungen notwendig sind. Der Sollwert für die vollständig geschlossene Stellposition kann auch festgelegt werden, indem weitere Sensorinformationen zu Hilfe genommen werden. Beispielsweise kann über den Durchfluss in der Rohrleitung aus der Prozessleittechnik ermittelt werden, zu welchem Zeitpunkt das Ventil vollständig abdichtet.

Darüber hinaus kann auch ein Verschleiß der Membran wirksam detektiert werden. Verschleiß meint im Rahmen der Erfindung nicht nur Materialabnutzungen der Membran sondern auch plastische Verformungen. Bleibt die Membran beispielsweise längere Zeit in einer geschlossenen Stellposition, entsteht mit zunehmender Zeit und Temperatur eine plastische Verformung der Membran. Anhand der plastischen Verformung der Membran lässt sich also der Alterungszustand bewerten. An den Rändern der verformten Nierenkontur der Membran können darüber hinaus im weiteren Verlauf Risse entstehen, die zum Ausfall des Membranventils führen.

Derartige Verschleißerscheinungen können bei einem handbetriebenen Membranventil insbesondere dadurch detektiert werden, dass der Anwender die Sperrvorrichtung über den Sollwert für die geschlossene Stellposition verfährt, da durch die plastische Verformung ein größerer Stellhub zwischen geöffneter und geschlossener Stellposition möglich ist. Dieser Unterschied zwischen der tatsächlichen Stellposition und dem Sollwert wird sodann von der Auswerteeinheit als Zustandsgröße ermittelt und dient als Information über den Zustand der Membran. Ausgehend von dieser Zustandsgröße kann beispielsweise ermittelt werden, ob ein Austausch der Membran notwendig ist. Auch hier können entsprechend empirisch ermittelte Datensätze in der Speichereinheit der Auswerteeinheit hinterlegt sein, so dass die Auswerteeinheit bei einem Abgleich unmittelbar ermittelt kann, ob bzw. wann ein solcher Austausch erforderlich ist. Ein weiterer Aspekt der Überwachung der Stellposition ist die Erkennung einer zu großen Verformung der Membrane über die Sollposition, die zu einer Überbelastung und damit zu einer kürzeren Lebensdauer der Membrane führen kann.

Gemäß einer Weiterbildung der Erfindung sind eine erste Tabelle und/oder eine erste Kennlinie in der Speichereinheit der Auswerteeinheit hinterlegt, wobei die Auswerteeinheit den Sollwert für die geschlossene Stellposition anhand der ersten Tabelle und/oder der ersten Kennlinie in Abhängigkeit des Betriebsdruckes im Innern des Membranventils bestimmt. Grundsätzlich muss die Sperrvorrichtung mit einem bestimmten Drehmoment betätigt werden, damit die Membran den Ventilsitz abdichtet. Insofern ist die fluiddichte geschlossene Stellposition nicht nur abhängig von dem Stellhub ausgehend von einer geöffneten Stellposition sondern auch von dem Betriebsdruck im Innern des Ventils. Insbesondere beim Schließen mit einer handbetriebenen Sperrvorrichtung muss der Bediener daher nicht nur die Kraft zur Verformung der Membran aufbringen, sondern es muss auch das Medium aus dem Ventil verdrängt werden. Mit steigendem Betriebsdruck steigt das benötigte Drehmoment am Handrad an. Das kann dazu führen, dass der Bediener denkt, dass die Membrane im Ventilsitz anliegt, weil das Drehmoment gefühlt hoch genug zum Schließen ist, obwohl das Drehmoment tatsächlich nur durch den hohen Betriebsdruck hoch ist und die Membrane noch nicht abdichtet.

Für unterschiedliche Membranventiltypen kann daher vor dem Betrieb die erste Tabelle bzw. die erste Kennlinie für die Schließstellung in Abhängigkeit von dem Betriebsdruck ermittelt werden. Für eine möglichst hohe Genauigkeit können auch Fertigungstoleranzen für jeden Ventiltyp in der Tabelle bzw. der Kennlinie berücksichtigt sein. Weiterhin können der verwendete Dichtungswerkstoff und alterungsbedingte veränderliche Werkstoffeigenschaften in der Tabelle bzw. der KV-Kennlinie berücksichtigt sein.

Bevorzugt kann der Betriebsdruck mittels einem Drucksensor erfasst und/oder über eine Eingabeeinheit in der Auswerteeinheit hinterlegt werden.

Alternativ oder ergänzend kann gemäß einer bevorzugten Weiterbildung der Erfindung eine zweite Tabelle und/oder eine zweite Kennlinie in der Speichereinheit der Auswerteeinheit hinterlegt sein, wobei die Auswerteeinheit die Durchflussmenge eines das Membranventil durchströmenden Fluides als Zustandsinformation anhand der Tabelle und/oder der Kennlinie in Abhängigkeit der erfassten Stellposition bestimmt.

Durch die Sensorvorrichtung kann der Öffnungsgrad des Ventils stufenlos und exakt bestimmt werden. Darüber hinaus ist es in der Regel für jeden Ventiltyp bekannt, wie groß der Volumenstrom in Abhängigkeit des Ventilhubs ist. Diese Abhängigkeit kann in Form einer Kennlinie beschrieben werden, welche KV-Kennlinie bezeichnet wird. Diese KV-Kennlinie kann dann als zweite Kennlinie oder in Form einer zweiten Tabelle in der Speichereinheit hinterlegt werden, so dass es möglich ist, basierend auf der Stellposition der Sperrvorrichtung den Volumenstrom zu ermitteln. Insbesondere können bei Teilöffnung des Ventils ungünstigen Betriebspunkten, bei denen Kavitation entsteht, schnell durchlaufen werden. Für eine bessere Genauigkeit bezieht die zweite Kennlinie bzw. die zweite Tabelle auch den Druckverlust des Ventils und die Dichte des Betriebsmediums mit ein. Diese Werte können beispielsweise direkt in der Speichereinheit hinterlegt sein oder über eine Eingabeeinheit hinterlegt werden. Darüber hinaus kann die Information über den Druckverlust auch über die Prozessleittechnik ermittelt und an die Auswerteeinheit übergeben werden. Durch den stufenlos ermittelten Hub und mit der Kenntnis der KV-Kennlinie sowie der Druckdifferenz und der Dichte ist es somit möglich, dass ein Bediener den Durchfluss am Handventil exakt einstellen kann. Der Bediener erhält z.B. über eine Anzeigeeinheit Informationen bezüglich des aktuellen Durchflusses und kann diesen mit dem gewünschten Durchfluss vergleichen und sodann das notwendige Stellsignal über das Handrad des Membranventils aufbringen.

Gemäß einer Weiterbildung ermittelt die Sensorvorrichtung auch einen Lagewinkel des Membranventils. Bevorzugt ist hierbei ein für eine Entleerung des Membranventils erforderlicher Sollwinkel in der Speichereinheit der Auswerteeinheit hinterlegt, wobei die Auswerteeinheit einen Unterschied zwischen dem erfassten Lagewinkel und dem Sollwinkel als Zustandsinformation erfasst.

Wie bereits eingangs erwähnt, gelten Membranventile als totraumfrei, wenn Sie in bestimmter Lage in die Rohrleitung eingebaut sind. Der Entleerungswinkel beschreibt, um welchen Winkel das Membranventil ausgehend von einer geraden Ausrichtung um die Rohrachse gedreht werden muss. Der Sollwinkel richtet sich demnach an dem Entleerungswinkel. Mithilfe der Sensorvorrichtung kann der Lagewinkel des Ventils bestimmt und beurteilt werden, ob dieses in einer korrekten Winkellage verbaut wurde.

Ferner kann mit der bekannten Einbaulage auch bewertet werden, ob das Ventil mit senkrechter Betätigungsrichtung eingebaut ist. Mithilfe des Gyroskops kann ein Wippen des Antriebs erkannt werden, was darauf hindeutet, dass der Antrieb nicht abgestützt ist und sich bei äußerer Anregung oder beim Schalten des Ventils bewegen kann. Hierbei ist zu beachten, dass ein Ventil bei einer waagerechten Einbaulage in der Rohrleitung oftmals eine zusätzliche Abstützung des Antriebs erfordert. Mithilfe des Gyroskops kann ferner ein Wippen des Antriebs erkannt werden, was darauf hindeutet, dass der Antrieb nicht abgestützt ist und sich bei einer äußeren Anregung oder beim Schalten des Ventils bewegen kann.

Gemäß einer Weiterbildung der Erfindung übermittelt die Auswerteeinheit die Zustandsinformationen und/oder die Stellpositionen an eine Ausgabeeinheit, wobei die Ausgabeeinheit die Zustandsinformationen und/oder die Stellpositionen in Form eines Ausgabesignals ausgibt. Die Ausgabeeinheit kann beispielsweise ein Bildschirm sein, welcher z.B. unmittelbar an der Sensorvorrichtung angeordnet ist. Hierzu bilden die Sensorvorrichtung, die Auswerteeinheit und die Ausgabeeinheit bevorzugt eine bauliche Einheit, welche in einem Gehäuse angeordnet ist. Der Bildschirm kann dann in einem Ausschnitt des Gehäuses eingebracht sein. Alternativ kann die Ausgabeeinheit auch ein stationärer Computer, ein Laptop, ein Tablett und/oder ein Smartphone sein. Das Ausgabesignal kann dann in Form eines optischen und/oder in Form eines akustischen Signals ausgegeben werden. Darüber hinaus sind auch haptische Ausgabesignale möglich z.B. über den Haptikmotor bzw. Vibrationsmotor eines Tablets oder eines Smartphones.

Bevorzugt stehen die Sensorvorrichtung mit der Auswerteeinheit und/oder die Sensorvorrichtung mit der Ausgabeeinheit über jeweils eine drahtlose Signalverbindung miteinander in Verbindung. Alternativ kann aber auch zwischen den einzelnen Einheiten eine Signalleitung vorgesehen sein, über die die Signale übermittelt werden.

Für die Energieversorgung des Messsystems aus der Sensorvorrichtung, der Auswerteeinheit und bevorzugt der Ausgabeeinheit kann ferner eine Energieversorgungseinheit vorgesehen sein. Diese kann entweder einen batteriegetriebenen Energiespeicher z.B. einen Akku aufweisen, an das Stromnetz angeschlossen sein oder Energie aus der Umgebung ernten, z.B. durch sogenanntes Energy Harvesting. Mit Energy Harvesting bezeichnet man die Gewinnung kleiner Mengen von elektrischer Energie aus Quellen wie Umgebungstemperatur, Vibrationen oder Luftströmungen für mobile Geräte mit geringer Leistung.

Neben dem Gyroskop und dem Magnetometer kann die Sensorvorrichtung auch einen Beschleunigungssensor, insbesondere einen dreiachsigen Beschleunigungssensor, und/oder ein Mikrofon aufweisen. Hierdurch können zusätzliche Informationen insbesondere Schwingungen noch besser detektiert werden. Mit Hilfe des Mikrofons können beispielsweise etwaige Strömungsgeräusche erkannt werden. Diese Information kann dazu dienen, die Endlagen der Stellpositionen festzulegen. Detektiert das Mikrofon zum Beispiel keine Strömungsgeräusche, dichtet das Membranventil fluiddicht ab. Darüber hinaus ist mit einem Mikrofon auch eine Schallanalyse des Ventils möglich, so dass insbesondere Kavitation erkannt werden kann. Ferner können auch Umweltsensoren zur Bestimmung des Umgebungs-Luftdruckes, der Lufttemperatur und/oder der Luftfeuchtigkeit in der Sensorvorrichtung integriert sein.

Gegenstand der Erfindung ist ferner eine Membranventilanordnung gemäß Anspruch 11 mit zumindest einem Membranventil und einem Messsystem, wobei das Messsystem zumindest eine Sensorvorrichtung und eine Auswerteeinheit aufweist und wobei das Messsystem zur Durchführung des erfindungsgemäßen Verfahrens ausgebildet und eingerichtet ist. Ferner weist das Membranventil bevorzugt eine Sperrvorrichtung auf, welche über ein Handrad das Membranventil von einer geöffneten in eine geschlossene Stellposition überführen kann, wobei zumindest die Sensorvorrichtung auf dem Handrad montiert ist.

Alle weiteren gegenständlichen Merkmale, die zuvor im Zusammenhang mit dem erfindungsgemäßen Verfahren offenbart wurden, gelten selbstverständlich auch für die Membranventilanordnung.

Im Folgenden wird die Erfindung anhand eines Ausführungsbeispiels näher erläutert. Es zeigen:
- Fig. 1: eine erfindungsgemäße Membranventilanordnung
- Fig. 2: ein erfindungsgemäßes Verfahren zur Überwachung des Membranventils mit der Membranventilanordnung gemäß Fig. 1

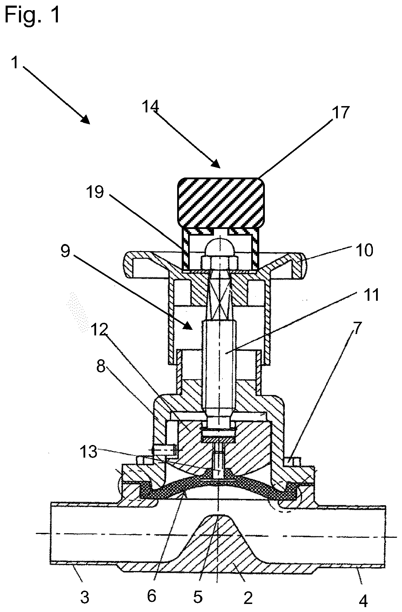

Figur 1 zeigt eine erfindungsgemäße Membranventilanordnung mit einem Membranventil 1, das ein Gehäuseunterteil 2 aufweist, welches Anschlüsse 3, 4 und ein Wehr 5 aufweist. Das Wehr 5 dient als Sitzfläche für die Membran 6. Die Membran 6 ist mithilfe von Schrauben als Verbindungsmitteln 7 eingespannt. Die Membran 6 ist zwischen dem Gehäuseunterteil 2 und einem Gehäuseoberteil 8 eingespannt. Im Gehäuseoberteil 8 sind die zur Betätigung der Membran 6 die notwendigen Elemente integriert.

Zur Betätigung der Membran ist eine Sperrvorrichtung 9 vorgesehen, welche einen Antrieb in Form eines Handrades 10 aufweist. Eine Spindel 11 ist an einem Druckstück 12 befestigt. Das Druckstück 12 ist verschieblich im Gehäuseoberteil 8 angeordnet und wird von einer inneren Wand des Gehäuseoberteils 8 geführt.

Durch Betätigung des Handrades 10 wird über die Spindel 11 eine horizontale Verschiebung des Druckstücks 12 bewirkt, sodass sich die Membran 6 verformt und der Querschnitt zwischen dem Wehr 5 und der Membran 6 vergrößert bzw. verkleinert werden kann. In die Membran 6 ist ein stiftartiges Element 13 eingebettet, das im Ausführungsbeispiel als Membranschraube ausgebildet ist.

Zur Überwachung des Membranventils 1 ist ferner ein Messsystem 14 vorgesehen, welches über eine Befestigungsplatte 19 oberhalb an dem Handrad 10 befestigt ist. Das Messsystem 14 weist eine Sensorvorrichtung 15 und eine Auswerteeinheit 16 auf, die in einem gemeinsamen Messgehäuse 17 angeordnet sind. Eine Ausgabeeinheit 18 kann extern bereitgestellt werden, wobei eine Übertragung der Signale zwischen der Auswerteeinheit 16 und der Ausgabeeinheit 18 über eine drahtlose Signalverbindung 22 und entsprechende drahtlose Verbindungsmittel bereitgestellt wird.

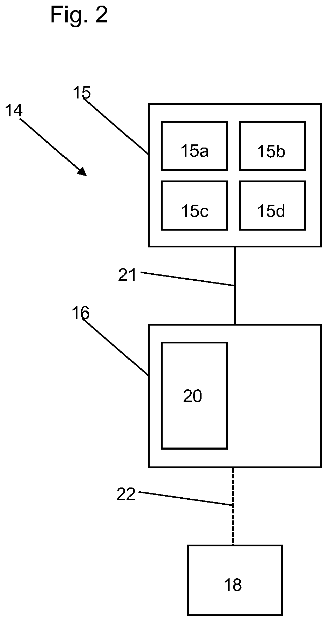

Mit Hilfe des Messsystems 14 kann eine Überwachung des Membranventils insbesondere eine Überwachung der Stellposition der Membran 6 verwirklicht werden, wobei die genaue Ausgestaltung des Messsystem 14 sowie dem damit durchführbaren Verfahren aus einer vergleichenden Betrachtung mit der Figur 2 hervorgeht.

Das Messystem 14 weist eine Sensorvorrichtung 15 bestehend aus insgesamt vier Sensoreinheiten 15a, 15b, 15c, 15d auf. Die Sensoreinheit 15a ist hierbei ein dreiachsiges Gyroskop, Sensoreinheit 15b ein dreiachsiges Magnetometer. Die Sensoreinheit 15c ist ein dreiachsiger Beschleunigungssensor, der gleichzeitig die Funktion eines Schwingungssensors wahrnimmt. Bei der Sensoreinheit 15d handelt es sich im Ausführungsbeispiel um ein Mikrofon.

Die mit den Sensoreinheiten 15a,15b,15c,15d ermittelten Signale werden über eine Verbindung 21 oder alternativ über ein Signalkabel an die Auswerteeinheit 16 übertragen, wobei die Auswerteeinheit 16 insbesondere anhand der von dem Gyroskop und dem Magnetometer detektierten Stellposition sicherheits- und/oder prozessrelevante Zustandsinformationen bestimmt und diese Informationen als Signal über die drahtlose Signalverbindung 22 an die Ausgabeeinheit (18) übermittelt. Die Auswerteeinheit 16 kann eine Speichereinheit 20 aufweisen, in der Sollwerte, Kennlinien und/oder Tabellen hinterlegt sind, wobei die Auswerteeinheit 16 die Zustandsinformationen über einen Abgleich der detektierten Signale mit den in der Speichereinheit 20 hinterlegten Werten ermittelt.

## Patentansprüche

1. Verfahren zur Überwachung von einem Membranventil (1), welches über eine Sperrvorrichtung (9) von einer geöffneten in eine geschlossene Stellposition überführt werden kann, wobei eine zumindest ein Gyroskop und ein Magnetometer aufweisende Sensorvorrichtung (15) die Stellposition detektiert und diese an eine Auswerteeinheit (16) übermittelt, wobei die Auswerteeinheit (16) anhand der detektierten Stellposition sicherheits- und/oder prozessrelevante Zustandsinformationen bestimmt wobei ein Sollwert für die geschlossene Stellposition in einer Speichereinheit (20) der Auswerteeinheit (16) hinterlegt ist und wobei die Auswerteeinheit (16) Unterschiede zwischen der von der Sensorvorrichtung (15) erfassten Stellposition mit dem Sollwert ermittelt und wobei die Auswerteeinheit (16) ausgehend von den Unterschieden Zustandsinformationen über das Erreichen einer fluiddichten Stellposition und über einen Verschleiß des Membranventils (1) und eine Überlastung der Membran (6) ermittelt.

2. Verfahren nach Anspruch 1, wobei eine erste Tabelle und/oder eine erste Kennlinie in der Speichereinheit (20) der Auswerteeinheit (16) hinterlegt sind und wobei die Auswerteeinheit (16) den Sollwert für die geschlossene Stellposition anhand der ersten Tabelle und/oder der ersten Kennlinie in Abhängigkeit des Betriebsdruckes im Innern des Membranventils (1) bestimmt.

3. Verfahren nach Anspruch 2, wobei der Betriebsdruck mittels einem Drucksensor erfasst wird und/oder über eine Eingabeeinheit in der Auswerteeinheit (16) hinterlegt werden kann.

4. Verfahren nach einem der Ansprüche 1 bis 3, wobei eine zweite Tabelle und/oder eine zweite Kennlinie in der Speichereinheit (20) der Auswerteeinheit (16) hinterlegt sind und wobei die Auswerteeinheit (16) die Durchflussmenge eines das Membranventil (1) durchströmenden Fluides als Zustandsinformation anhand der zweiten Tabelle und/oder der Kennlinie in Abhängigkeit der erfassten Stellposition bestimmt.

5. Verfahren nach einem der Ansprüche 1 bis 4, wobei die Sensorvorrichtung (15) mindestens einen Lagewinkel des Membranventils (1) ermittelt.

6. Verfahren nach Anspruch 5, wobei ein für eine Entleerung des Membranventils (1) erforderlicher Sollwinkel in der Speichereinheit (20) der Auswerteeinheit (16) hinterlegt ist und die Auswerteeinheit (16) einen Unterschied zwischen dem erfassten Lagewinkel und dem Sollwinkel als Zustandsinformation erfasst.

7. Verfahren nach einem der Ansprüche 1 bis 6, wobei die Auswerteeinheit (16) die Zustandsinformationen und/oder die Stellpositionen an eine Ausgabeeinheit (18) übermittelt und wobei die Ausgabeeinheit (18) die Zustandsinformationen und/oder die Stellpositionen in Form eines Ausgabesignals ausgibt.

8. Verfahren nach Anspruch 7, wobei die Sensorvorrichtung (15) mit der Auswerteeinheit (16) und/oder die Auswerteeinheit (16) mit der Ausgabeeinheit (18) über jeweils eine drahtlose Signalverbindung miteinander in Verbindung stehen.

9. Verfahren nach einem der Ansprüche 1 bis 8, wobei die das Gyroskop und/oder das Magnetometer dreiachsig ausgebildet sind.

10. Verfahren nach einem der Ansprüche 1 bis 9, wobei die Sensorvorrichtung (15) einen Beschleunigungssensor, insbesondere einen dreiachsigen Beschleunigungssensor, und/oder ein Mikrofon aufweist.

11. Membranventilanordnung mit zumindest einem Membranventil (1) und einem Messsystem (14), wobei das Messsystem (14) zumindest eine Sensorvorrichtung (15) und eine Auswerteeinheit (16) aufweist und wobei das Messsystem (14) zur Durchführung des Verfahrens nach einem der Ansprüche 1 bis 10 ausgebildet und eingerichtet ist.

12. Membranventilanordnung nach Anspruch 11, wobei das Membranventil (1) eine Sperrvorrichtung (9) aufweist, welche über ein Handrad das Membranventil (1) von einer geöffneten in eine geschlossene Stellposition überführen kann, wobei zumindest die Sensorvorrichtung (15) auf dem Handrad montiert ist.

## Claims

1. Method for monitoring a diaphragm valve (1) which can be transferred from an open actuating position into a closed actuating position via a locking device (9), wherein a sensor device (15) having at least a gyroscope and a magnetometer detects the actuating position and transmits it to an evaluation unit (16), wherein the evaluation unit (16) determines safety-relevant and/or process-relevant state information on the basis of the detected actuating position, wherein a target value for the closed actuating position is stored in a storage unit (20) of the evaluation unit (16), and wherein the evaluation unit (16) determines differences between the actuating position captured by the sensor device (15) and the target value, and wherein the evaluation unit (16) determines state information relating to the achievement of a fluid-tight actuating position and relating to wear of the diaphragm valve (1) and overloading of the diaphragm (6) on the basis of the differences.

2. Method according to Claim 1, wherein a first table and/or a first characteristic curve is/are stored in the storage unit (20) of the evaluation unit (16), and wherein the evaluation unit (16) determines the target value for the closed actuating position with reference to the first table and/or the first characteristic curve on the basis of the operating pressure inside the diaphragm valve (1).

3. Method according to Claim 2, wherein the operating pressure is captured by means of a pressure sensor and/or may be stored via an input unit in the evaluation unit (16) .

4. Method according to one of Claims 1 to 3, wherein a second table and/or a second characteristic curve is/are stored in the storage unit (20) of the evaluation unit (16), and wherein the evaluation unit (16) determines the flow rate of a fluid flowing through the diaphragm valve (1) as state information with reference to the second table and/or the characteristic curve on the basis of the captured actuating position.

5. Method according to one of Claims 1 to 4, wherein the sensor device (15) determines at least one position angle of the diaphragm valve (1).

6. Method according to Claim 5, wherein a target angle needed to drain the diaphragm valve (1) is stored in the storage unit (20) of the evaluation unit (16), and the evaluation unit (16) captures a difference between the captured position angle and the target angle as state information.

7. Method according to one of Claims 1 to 6, wherein the evaluation unit (16) transmits the state information and/or the actuating positions to an output unit (18), and wherein the output unit (18) outputs the state information and/or the actuating positions in the form of an output signal.

8. Method according to Claim 7, wherein the sensor device (15) is connected to the evaluation unit (16) and/or the evaluation unit (16) is connected to the output unit (18) via a wireless signal connection in each case.

9. Method according to one of Claims 1 to 8, wherein the gyroscope and/or the magnetometer has/have a three-axis design.

10. Method according to one of Claims 1 to 9, wherein the sensor device (15) has an acceleration sensor, in particular a three-axis acceleration sensor, and/or a microphone.

11. Diaphragm valve arrangement having at least one diaphragm valve (1) and a measurement system (14), wherein the measurement system (14) has at least one sensor device (15) and an evaluation unit (16), and wherein the measurement system (14) is designed and configured to carry out the method according to one of Claims 1 to 10.

12. Diaphragm valve arrangement according to Claim 11, wherein the diaphragm valve (1) has a locking device (9) which can transfer the diaphragm valve (1) from an open actuating position into a closed actuating position via a hand wheel, wherein at least the sensor device (15) is mounted on the hand wheel.

## Revendications

1. Procédé de surveillance d'une soupape à diaphragme (1) qui peut être amenée à passer d'une position de réglage ouverte à une position de réglage fermée par l'intermédiaire d'un dispositif de blocage (9), dans lequel un dispositif de détection (15) comportant au moins un gyroscope et un magnétomètre détecte la position de réglage et la transmettant à une unité d'évaluation (16), dans lequel l'unité d'évaluation (16) détermine des informations d'état relatives à la sécurité et/ou au processus sur la base de la position de réglage détectée, dans lequel une valeur de consigne pour la position de réglage fermée est stockée dans une unité de mémoire (20) de l'unité d'évaluation (16) et l'unité d'évaluation (16) détermine des différences entre la position de réglage détectée par le dispositif de détection (15) et la valeur de consigne et dans lequel l'unité d'évaluation (16) détermine, à partir des différences, des informations d'état indiquant si une position de réglage étanche aux fluides est atteinte et si la soupape à diaphragme (1) présente une usure et si le diaphragme (6) est soumis à une surcharge.

2. Procédé selon la revendication 1, dans lequel une première table et/ou une première courbe caractéristique sont stockées dans l'unité de mémoire (20) de l'unité d'évaluation (16) et dans lequel l'unité d'évaluation (16) détermine la valeur de consigne pour la position de réglage fermée sur la base de la première table et/ou de la première courbe caractéristique en fonction de la pression de fonctionnement à l'intérieur de la soupape à diaphragme (1).

3. Procédé selon la revendication 2, dans lequel la pression de fonctionnement est détectée au moyen d'un capteur de pression et/ou peut être stockée dans l'unité d'évaluation (16) par l'intermédiaire d'une unité d'entrée.

4. Procédé selon l'une des revendications 1 à 3, dans lequel une seconde table et/ou une seconde courbe caractéristique sont stockées dans l'unité de mémoire (20) de l'unité d'évaluation (16) et dans lequel l'unité d'évaluation (16) détermine le débit d'un fluide traversant la soupape à diaphragme (1) en tant qu'information d'état sur la base de la seconde table et/ou de la courbe caractéristique en fonction de la position de réglage détectée.

5. Procédé selon l'une des revendications 1 à 4, dans lequel le dispositif de détection (15) détermine au moins un angle d'orientation de la soupape à diaphragme (1).

6. Procédé selon la revendication 5, dans lequel un angle de consigne nécessaire pour un vidage de la soupape à diaphragme (1) est stocké dans l'unité de mémoire (20) de l'unité d'évaluation (16) et l'unité d'évaluation (16) détecte une différence entre l'angle d'orientation détecté et l'angle de consigne en tant qu'information d'état.

7. Procédé selon l'une des revendications 1 à 6, dans lequel l'unité d'évaluation (16) transmet les informations d'état et/ou les positions de réglage à une unité de sortie (18) et dans lequel l'unité de sortie (18) délivre les informations d'état et/ou les positions de réglage sous la forme d'un signal de sortie.

8. Procédé selon la revendication 7, dans lequel le dispositif de détection (15) est en liaison avec l'unité d'évaluation (16) et/ou l'unité d'évaluation (16) est en liaison avec l'unité de sortie (18) par l'intermédiaire d'une liaison de signaux sans fil respective.

9. Procédé selon l'une des revendications 1 à 8, dans lequel le gyroscope et/ou le magnétomètre sont triaxiaux.

10. Procédé selon l'une des revendications 1 à 9, dans lequel le dispositif de détection (15) comprend un capteur d'accélération, notamment un capteur d'accélération triaxial, et/ou un microphone.

11. Ensemble à soupape à diaphragme comprenant au moins une soupape à diaphragme (1) et un système de mesure (14), dans lequel le système de mesure (14) comporte au moins un dispositif de détection (15) et une unité d'évaluation (16), dans lequel le système de mesure (14) est conçu et configuré pour mettre en œuvre le procédé selon l'une des revendications 1 à 10.

12. Ensemble à soupape à diaphragme selon la revendication 11, dans lequel la soupape à diaphragme (1) comporte un dispositif de blocage (9) qui peut faire passer la soupape à diaphragme (1) d'une position de réglage ouverte à une position de réglage fermée par l'intermédiaire d'un volant, dans lequel au moins le dispositif de détection (15) est monté sur le volant.
